(19) Europäisches Patentamt

European Patent Office

Office européen des brevets

(11) **EP 1 647 133 B1**

(12) **FASCICULE DE BREVET EUROPEEN**

(45) Date de publication et mention
de la délivrance du brevet:
**02.11.2006 Bulletin 2006/44**

(21) Numéro de dépôt: **04801774.3**

(22) Date de dépôt: **10.05.2004**

(51) Int Cl.:
*H04M 7/00* *(2006.01)*

(86) Numéro de dépôt international:
**PCT/FR2004/050186**

(87) Numéro de publication internationale:
**WO 2005/011245 (03.02.2005 Gazette 2005/05)**

(54) **CONTRÔLE D'ADMISSION DE SESSION MULTIMEDIA SUR CRITERE DE RESSOURCES RESEAU**

ZUGRIFFSREGELUNG FÜR EINE MULTIMEDIA-SITZUNG GEMÄSS NETZWERK-
BETRIEBSMITTELVERFÜGBARKEIT

ACCESS CONTROL OF A MULTIMEDIA SESSION ACCORDING TO NETWORK RESOURCE
AVAILABILITY

(84) Etats contractants désignés:
**AT BE BG CH CY CZ DE DK EE ES FI FR GB GR
HU IE IT LI LU MC NL PL PT RO SE SI SK TR**

(30) Priorité: **21.07.2003 FR 0350360**

(43) Date de publication de la demande:
**19.04.2006 Bulletin 2006/16**

(73) Titulaire: **FRANCE TELECOM
75015 Paris (FR)**

(72) Inventeurs:
• **HENRY, Alain
F-22730 TREGASTEL (FR)**
• **LECORGNE, Gilles
F-22300 LANNION (FR)**

(74) Mandataire: **Poulin, Gérard et al
BREVALEX
3, rue du Docteur Lancereaux
75008 Paris (FR)**

(56) Documents cités:
**EP-A- 1 326 359        US-A1- 2002 093 911**

**Description**

**DOMAINE TECHNIQUE**

L'invention se situe dans le domaine des télécommunications et concerne plus spécifiquement un procédé de contrôle d'admission de session multimédia entre un terminal A et un terminal B connectés à un réseau de télécommunication dans lequel, préalablement à l'établissement de la session, le terminal A (respectivement B) transmet au terminal B (respectivement A) un message contenant une liste de codecs à utiliser pour coder les informations à échanger au cours de la session à établir, et à la fin d'une session, le terminal A (respectivement B) transmet au terminal B (respectivement A) une demande de fin de session

Le procédé s'applique notamment dans des réseaux IP (« Internet Protocol ») privés ou publics.

**ÉTAT DE LA TECHNIQUE ANTÉRIEURE**

Lorsqu'une demande d'ouverture de session est émise par une entité appelante d'un réseau, dite entité d'origine, cette dernière émet des messages contenant des informations sur l'ensemble des "codecs" (c'est-à-dire sur les procédures de "COmpression/DECompression" des données pour les transmissions sur le réseau) proposés pour établir une session multimédia avec une entité appelée du réseau, dite entité de destination. Pour chaque type de flux (audio, vidéo etc..), l'entité d'origine qui souhaite établir une session propose un ou plusieurs codecs à l'entité de destination. A chaque codec correspond un débit de transmission de données sur le réseau dépendant du mode de transfert en vigueur sur ce réseau (par exemple le mode de transfert ATM). D'autres protocoles peuvent être utilisés spécifiquement pour la réservation de bande passante, par exemple le protocole RSVP (« ressource reservation protocol »).

Les mécanismes de contrôle de bande passante préconisés par les standards actuels pour l'établissement d'une session entre deux terminaux dans un réseau à transmission par paquets sont basés sur la négociation des systèmes de codage de l'information multimédia (codecs audio, vidéo) directement entre ces terminaux au moyen des protocoles de signalisation tels que par exemple les protocoles SIP ou H323. La demande de bande passante est directement issue des terminaux et est portée par ces messages de signalisation.

De nombreux produits industriels connus, regroupés sous le terme générique de SBC (« Session Border Controler »), offrent des solutions de contrôle d'admission de sessions multimédia dans lesquelles le terminal d'origine transmet au terminal destinataire une demande contenant des propositions de codecs pour établir une session, le terminal de destination répond alors en acceptant un ou plusieurs codecs parmi les codecs proposés en fonction des types de données à transmettre au cours de la session et calculent une bande passante en fonction des codecs acceptés et des capacités de transport propres aux interfaces d'entrée/sortie entre le réseau d'accès et le reste du réseau.

Un tel système est décrit dans EP 1 326 359 A.

Un inconvénient de ces dispositifs provient du fait que le contrôle d'admission de session ne peut garantir que l'absence de saturation des interfaces lors des sessions mais pas celle de la liaison d'accès.

En outre, ces systèmes ne permettent pas de réserver des ressources en bande passante, lors de l'établissement d'une session, qui tiennent compte des ressources du réseau (ou du réseau d'accès), notamment sur la liaison considérée entre le point d'origine et le point de destination. Ceci est préjudiciable à une gestion optimale du réseau en termes de bande passante.

Un autre inconvénient de l'art antérieur lié à ce mode de contrôle des ressources provient du fait qu'il n'est pas possible de garantir une qualité de service sur une liaison donnée apte à supporter plusieurs sessions. Ceci est particulièrement pénalisant pour les opérateurs de téléphonie, par exemple, pour lesquels il est important de pouvoir garantir certains paramètres de qualité de service (ou QoS, « Quality of Service »).

**EXPOSÉ DE L'INVENTION**

L'invention préconise un mécanisme de contrôle d'admission de session entre un premier terminal A situé en un point d'origine et un deuxième terminal B situé en un point de destination dans un réseau de télécommunication, qui prenne en compte de manière dynamique, non seulement les codecs proposés par le terminal A et acceptés par B mais aussi les ressources courantes en bande passante disponibles sur cette liaison.

Ces buts sont atteints grâce à un procédé dans lequel, préalablement à l'établissement de la session, le terminal A (respectivement B) transmet au terminal B (respectivement A) un message contenant une liste de codecs à utiliser pour coder les informations à échanger au cours de la session à établir, et à la fin d'une session, le terminal A (respectivement B) transmet au terminal B (respectivement A) une demande de fin de session.

Le procédé selon l'invention comporte les étapes suivantes :

- intercepter le message contenant la liste de codecs,

- modifier la liste de codecs proposée dans le message intercepté pour tenir compte des ressources courantes en bande passante disponibles pour la liaison entre le terminal A et le terminal B, et
- transmettre au terminal B (respectivement A) le message contenant la liste de codecs modifiée,
- réserver les ressources et mettre à jour la base de données d'utilisation des ressources d'accès.

Les opérateurs de télécommunication peuvent ainsi contrôler la ressource partagée entre plusieurs utilisateurs d'un réseau et éviter la saturation des liaisons d'accès du réseau.

Ce procédé comporte en outre les étapes suivantes en cas d'acceptation par le terminal B (respectivement A) de la demande d'établissement de session,

- établir la session entre le terminal A et le terminal B en utilisant les codecs modifiés.
- calculer les ressources résiduelles en bande passante en fonction des ressources en bande passante correspondant aux codecs acceptés,
- mémoriser la valeur des ressources résiduelles calculée à l'étape précédente dans une base de données d'utilisation des ressources d'accès,

  - filtrer les flux média en fonction d'une commande de débit,
  - autoriser la transmission de flux entre le terminal A et le terminal B selon les ressources de bande passante correspondant aux codecs acceptés,

et en cas de refus de la session,

- transmettre au terminal A (respectivement B) un message indiquant l'échec de l'établissement de session.
- mettre à jour ladite base de données en fonction des ressources en bande passante libérées sur la liaison.

Notons que dans un contexte IP, les flux média sont identifiés par les adresses IP et les ports UDP concernés.

Grâce au procédé selon l'invention, la transmission d'information consécutive à l'établissement de la session entre le terminal A et le terminal B est effectuée selon des débits prescrits acceptés à la fois par le terminal A et le terminal B et compatibles avec la capacité courante de transmission de la liaison entre le terminal A et le terminal B.

En cas d'une demande de fin d'une session multimédia émise par le terminal A (respectivement B), le procédé selon l'invention comporte les étapes suivantes :

- intercepter la demande de fin de session émise par le terminal A (respectivement B),
- identifier la session, en cours dont la fin est demandée,
- déterminer les codecs utilisés au cours de ladite session,
- transmettre la demande interceptée au terminal B (respectivement A)
- bloquer la transmission entre le terminal A et le terminal B ;
- calculer les valeurs des ressources résiduelles en bande passante en fonction des ressources libérées sur la liaison entre le terminal A et le terminal B par l'arrêt de la session, et
- mettre à jour la base de données d'utilisation des ressources d'accès au réseau, avec les valeurs résiduelles de capacité de transport calculée à l'étape précédente.

Dans une application particulière du procédé selon l'invention, le réseau de télécommunication est à transfert de données par paquets et le message contenant la liste de codecs échangée entre le terminal A et le terminal B est transmis via l'un des protocoles de signalisation SIP ou H323.

L'invention concerne également un dispositif de contrôle d'admission de session multimédia entre un terminal A et un terminal B connectés à un réseau de télécommunication dans lequel, préalablement à l'établissement de la session, le terminal A (respectivement B) transmet au terminal B (respectivement A) un message contenant une liste de codecs à utiliser pour coder les informations à échanger au cours de la session à établir, et à la fin d'une session, le terminal A (respectivement B) transmet au terminal B une demande de fin de session.

Le dispositif selon l'invention comporte des moyens pour intercepter le message contenant la liste de codecs et des moyens pour modifier la liste de codecs proposée dans le message intercepté pour tenir compte des ressources courantes en bande passante disponibles pour la liaison entre le terminal A et le terminal B.

Dans un mode particulier de réalisation, le dispositif comporte :

- un module de filtrage MF destiné à intercepter les flux de signalisation en provenance du terminal A (respectivement B) ;
- un module d'appel MA destiné à extraire les codecs proposés dans les messages de signalisation,
- un module d'admission de session MAS destiné à générer une nouvelle demande d'établissement de session avec une liste de codecs dont les capacités de transport sont compatibles avec les ressources en bande passante disponibles pour la liaison entre le terminal A et le terminal B, et

- une base de donnée BD contenant la valeur des ressources en bande passante disponibles pour la liaison entre le terminal A et le terminal B.

Il est à noter que le rôle des terminaux A et B peut être échangé sans modifier le procédé selon l'invention. Le terminal B peut en effet être le point d'origine de la demande d'établissement de session et le terminal A le point de destination de cette demande. Dans tous les cas, l'entité de destination de la demande d'établissement, ou de fin, de session ainsi que l'entité d'origine de cette demande sont des points de terminaison du protocole de signalisation, c'est-à-dire qu'elles sont l'élément cité par le protocole de signalisation (dans les informations de signalisation qui indiquent le point d'origine et le point de destination) qui correspond au point de destination ou au point d'origine des messages échangés.

## BRÈVE DESCRIPTION DES DESSINS

D'autres caractéristiques et avantages de l'invention ressortiront de la description qui suit, prise à titre d'exemple non limitatif, en référence aux figures annexées dans lesquelles :

- la figure 1 représente schématiquement un dispositif pour la mise en oeuvre du procédé selon l'invention,
- la figure 2 est un organigramme illustrant le procédé selon l'invention en cas d'émission par un terminal d'une demande d'établissement de session,
- la figure 3 est un organigramme illustrant le procédé selon l'invention en cas d'émission par un terminal d'une demande de fin de session

## EXPOSÉ DÉTAILLÉ DE MODES DE RÉALISATION PARTICULIERS

La description qui suit concerne une application particulière du procédé dans un réseau IP.

Rappelons que les protocoles de signalisation utilisés dans les réseaux IP pour permettre la tenue de conférences (audio et vidéo) point à point ou multipoints entre un terminal A et un terminal B sont :

- le protocole H323 qui est une norme concernant la téléconférence multimédia sur réseaux à transmission par paquets (incluant les transferts IP) recommandée par l'ITU (Pour International Telecommunication Union), s'appuyant sur les protocoles de communication RTP/RTCP (« Real time Transfer Protocol/Real time Transfer Control Protocol ») définis par l'IETF (Internet Engineering Task Force) et aussi sur des codecs audio (par exemple : G. 711, G.723.1, G.728, ..) et des codecs vidéo (par exemple : H261 et H.263). Une documentation sur H323 est disponible sur le site de l'ITU: www.itu.int/ITUT/publications/recs.html, serie H.
- le protocole SIP (« Session Initialisation Protocol »), créé pour remplacer les protocoles définis dans la norme H323, est un protocole de signalisation pour la téléphonie et la visioconférence utilisé pour les transmissions en temps réel. Ce protocole est basé sur http et MIME (pour Multipurpose Internet Mail Extensions) et s'appuie sur le protocole SDP (Session Description Protocol », [RFC2327]) pour la description des sessions et sur RTP (« Real Time Protocol ») pour le transport des données.

L'usage du protocole SDP dans les messages SIP est décrit dans l'annexe B de RFC2543 (les références RFC sont disponibles sur le site Internet de l'IETF. http://wwv.ietf.org/rfc).

Dans la suite de la description, on supposera que les terminaux A et B sont connectés en mode ATM via une liaison d'accès au réseau IP et disposent d'un canal virtuel au sein d'un conduit virtuel sur cette liaison.

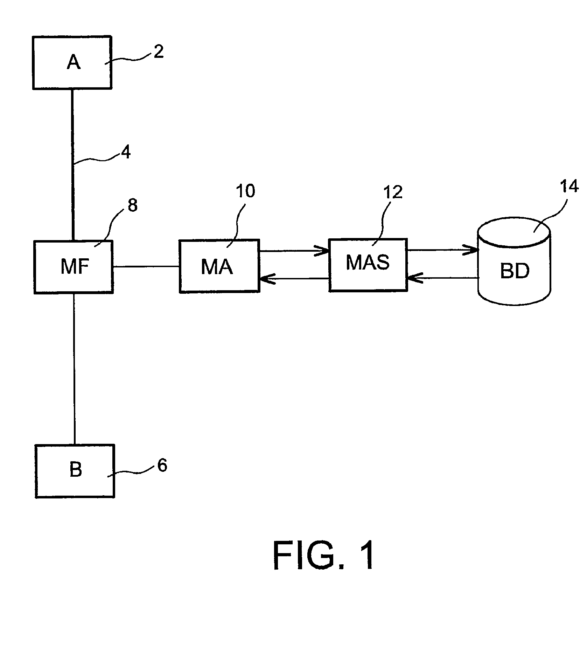

La figure 1 illustre schématiquement un dispositif destiné à mettre en oeuvre le procédé selon l'invention dans lequel sont représentés le terminal A référencé 2, la liaison d'accès 4 du terminal A, le terminal B référencé 6, un module de filtrage de flux média MF apte à filtrer sur commande de filtrage, reçue d'un module d'appel MA, les flux média relatifs à une session identifiée sur la liaison entre le terminal A et l'entité B, selon des prescriptions de débit indiquées dans la commande de filtrage, et apte à bloquer sur commande de blocage, reçue du module MA, les flux média relatifs à une session identifiée sur cette liaison ; le module MF étant apte à intercepter et à router vers le module MA les flux de signalisation en provenance du terminal A ainsi que les flux de signalisation en provenance de l'entité B ; un module d'appel MA 10 destiné à extraire les codecs proposés dans les messages de signalisation, un module MAS 12 d'admission de session destiné à générer une demande d'établissement de session avec une liste de codecs dont les capacités de transport sont compatibles avec les ressources en bande passante disponibles pour la liaison entre le terminal A et le terminal B, et une base de données BD 14 contenant les valeurs courantes des capacités de transport des canaux et conduits virtuels de la liaison d'accès du terminal A (respectivement B), et notamment les valeurs courantes des débits disponibles DCvc et DCvp, respectivement pour le canal virtuel (VC) et le conduit virtuel (VP) du terminal A (respectivement B) et un module de routage de flux de signalisation MRFS apte à router les flux de signalisation transmis entre l'entité A et l'entité B vers le module d'appel MA.

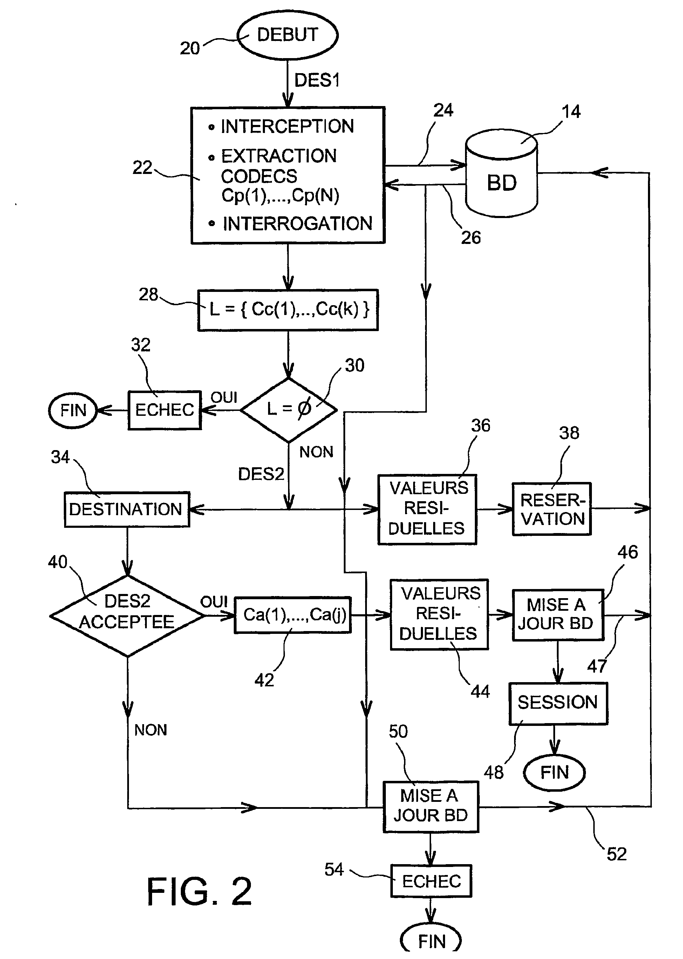

Les étapes du procédé dans le cas d'une demande d'établissement de session émise par le terminal A vont être décrites en référence à la figure 2.

A l'étape 20 une demande d'établissement de session DES1 contenant une liste Cp(1),Cp(N) de codecs est émise par le terminal A sur la liaison d'accès 4.

A l'étape 22, la demande DES1 est interceptée par le module MF 8 puis dirigée vers le module MA 10. Ce dernier extrait les codecs proposés Cp(1),...,Cp(N) et envoie (flèche 24) à la base de données 14 un message d'interrogation pour connaître les valeurs courantes des capacités de transport des canaux et conduits virtuels de la liaison d'accès du terminal A, et notamment les valeurs courantes des débits disponibles DCvc et DCvp, respectivement pour le canal virtuel (VC) et le conduit virtuel (VP) du terminal A.

En réponse à ce message, la base de données 14 fournit (flèche 26) au module MA 10 les valeurs demandées. Avec ces valeurs et avec les codecs extraits, une liste L de codecs compatibles Cc(1),..,Cc(K) est déterminée à l'étape 28. L'étape 30 consiste à vérifier la compatibilité des codecs de la liste établie à l'étape 28 avec les valeurs courantes DCvc et DCvp respectivement des capacités de transport des canaux et conduits virtuels. Cette vérification est réalisée comme suit :

En désignant par DCp(i) le débit correspondant au codec Cp(i) (i varie de 1 à N), si DCp (i) < DCvc et si DCp (i) < DCvp, alors le codec Cp(i) est compatible et est alors ajouté à la liste L. Si la liste L est vide, un message d'échec est alors transmis (étape 32) au terminal A.

Si, au contraire, L n'est pas vide alors les codecs compatibles Cc(1),..,Cc(K) qu'elle contient sont insérés dans une nouvelle demande DES2 qui est envoyée (étape 34) au terminal B.

Parallèlement, des valeurs résiduelles de capacité de transport, notamment des débits résiduels DRvc et DRvp (respectivement pour le canal virtuel et le conduit virtuel du terminal A), sont calculées à l'étape 36.

En désignant par DCc(i) le débit correspondant au codec compatible Cc(i) (i varie de 1 à K), on obtient les débits résiduels comme suit :

$$\mathtt{DRvc = DCvc - Max(DCc(1),..,DCc(K))}$$

et

$$\mathtt{DRvp = DCvp - Max(DCc(1),..,DCc(K)).}$$

L'étape 38 consiste à réserver des ressources correspondant aux valeurs des capacités de transport des canaux virtuels et des conduits virtuels de la liaison d'accès du terminal A.

Cette réservation de ressources est effectuée en mettant à jour la base de données 14 avec les valeurs résiduelles des capacités de transport des canaux virtuels et des conduits virtuels de la liaison d'accès du terminal A calculées précédemment.

La mise à jour de la base de données 14 se fait par les opérations d'affectation suivantes :

$$\mathtt{DCvc = DRvc \ et \ DCvp = DRvp.}$$

L'étape 40 consiste à vérifier si le terminal B accepte ou refuse la nouvelle demande DES2.

Si le terminal B accepte cette nouvelle demande DES2, alors les codecs acceptés Ca(1),..,Ca(J) sont mémorisés (étape 42). Ces codecs sont ensuite utilisés avec les valeurs courantes des capacités de transport des canaux et conduits virtuels de la liaison d'accès du terminal A pour calculer les valeurs résiduelles (étape 44) comme suit :

en désignant par DCa(i) le débit correspondant au codec accepté Ca(i) (i varie de 1 à J), les valeurs résiduelles sont données par les expressions suivantes :

$$\mathtt{DRvc = DCvc - Max(DCa(1),..,DCa(J))}$$

et

$$DRvp = DCvp - Max(DCa(1),..,DCa(J)) ;$$

A l'étape 46, la base BD 14 est mise à jour par l'envoi (flèche 47) d'un message contenant les valeurs résiduelles calculées. Cette mise à jour se fait par les opérations d'affectation suivantes :

$$DCvc = DRvc \ et \ DCvp = DRvp .$$

A l'étape 48, la session est autorisée.

Si à l'étape 40 la demande DES2 n'est pas acceptée par le terminal B, alors la base BD est mise à jour (étape 50) par un message (flèche 52) contenant les valeurs courantes des capacités de transport des canaux et conduits virtuels de la liaison d'accès du terminal pour remplacer les valeurs stockées. Un message d'échec est ensuite envoyé (étape 54) au terminal B.

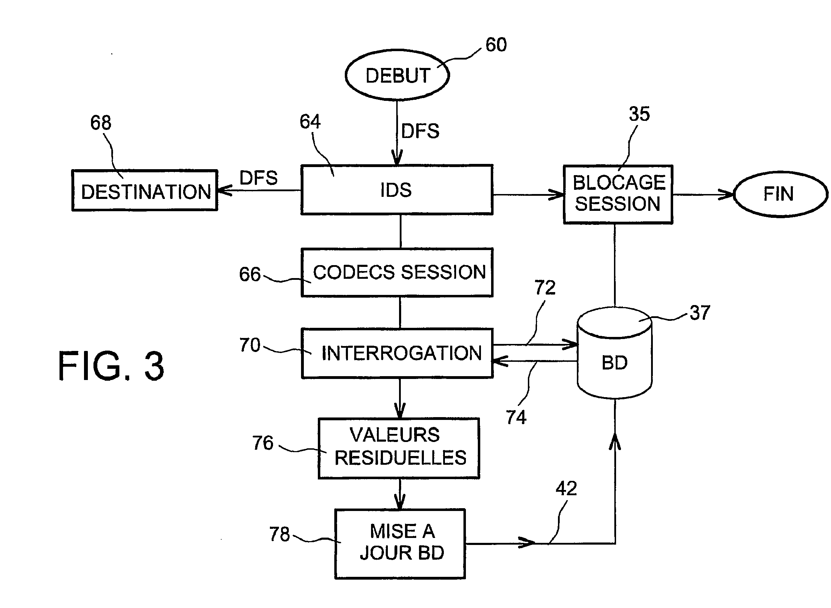

Les étapes du procédé dans le cas d'une demande de fin de session émise par le terminal A vont maintenant être décrites en référence à la figure 3.

A l'étape 60, un message DFS de demande de fin de session est émis par le terminal A sur la liaison d'accès 4.

A l'étape 62 le module MA 10 extrait du message DFS l'identifiant de session IDS 64, les codecs 66 en vigueur pour la session en cours Cs(1),..,Cs(P) préalablement mémorisés lors de l'ouverture de la session.

Le message DFS est ensuite transmis au terminal B (étape 68).

A l'étape 70, le module MA 10 envoie (flèche 72) à la base de données 14 une interrogation pour obtenir les valeurs courantes des capacités de transport des canaux virtuels et des conduits virtuels de la liaison d'accès du terminal A.

En réponse à cette interrogation, la base de donnée 14 fournit (flèche 74) les valeurs courantes des capacités de transport de la liaison d'accès au terminal A, notamment le débit courant du canal virtuel de A, DCvc, et celui du conduit virtuel de A, DCvp .

A partir de ces valeurs et des valeurs correspondant aux codecs 66 en vigueur, des valeurs résiduelles sont calculées (étape 76) en fonction des ressources libérées sur cette liaison par l'arrêt de la session, correspondant aux codecs associés à l'identifiant de session relevé. En désignant par DRvc le débit résiduel du canal virtuel de A , par DRvp celui du conduit virtuel de A et par DCs(i) le débit correspondant au codec Cs(i) (i varie de 1 à P), les valeurs résiduelles sont calculées comme suit :

$$DRvc = DCvc + Max(DCs(1),..,DCs(P))$$

et

$$DRvp = DCvp + Max(DCs(1),..,DCs(P)),$$

La valeur de débit Max(DCs(1),..,DCs(P)) est la valeur de débit correspondant aux codecs mis en mémoire lors de l'ouverture de la session.

La base BD est ensuite mise à jour (étape 78) par l'envoi d'un message 42 contenant les valeurs résiduelles calculées.

Pour les débits, la mise à jour s'effectue par l'opération d'affectation suivante :

$$DCvc = DRvc \ et \ DCvp = DRvp.$$

## Revendications

1. Procédé de contrôle d'admission de session multimédia entre un terminal A et un terminal B connectés à un réseau de télécommunication dans lequel, préalablement à l'établissement de la session, le terminal A (respectivement B) transmet au terminal B (respectivement A) un message contenant une liste de codecs à utiliser pour coder les informations à échanger au cours de la session à établir, et à la fin d'une session, le terminal A (respectivement B) transmet au terminal B (respectivement A) une demande de fin de session, procédé **caractérisé en ce qu'**il comporte les étapes suivantes :

- intercepter le message contenant la liste de codecs,
- modifier la liste de codecs proposée dans le message intercepté pour tenir compte des ressources courantes en bande passante disponibles pour la liaison entre le terminal A et le terminal B, et
- transmettre au terminal B (respectivement A) le message contenant la liste de codecs modifiée,
- réserver les ressources et mettre à jour une base de données d'utilisation des ressources d'accès.

2. Procédé selon la revendication 1, comportant les étapes suivantes en cas d'acceptation par le terminal B (respectivement A) de la demande d'établissement de session :

- établir la session entre le terminal A et le terminal B en utilisant les codecs modifiés.
- calculer les ressources résiduelles en bande passante en fonction des ressources en bande passante correspondant aux codecs acceptés,
- mémoriser la valeur des ressources résiduelles calculée à l'étape précédente dans une base de données d'utilisation des ressources d'accès,

- filtrer les flux média en fonction d'une commande de débit,
- autoriser la transmission de flux entre le terminal A et le terminal B selon les ressources de bande passante correspondant aux codecs acceptés.

et en cas de refus de la session,
- transmettre au terminal A (respectivement B) un message indiquant l'échec de l'établissement de session.
- mettre à jour ladite base de données en fonction des ressources en bande passante libérées sur la liaison.

3. Procédé selon la revendication 1, comportant les étapes suivantes à la fin d'une session multimédia :

- intercepter la demande de fin de session émise par le terminal A (respectivement B ),
- identifier la session, en cours dont la fin est demandée,
- déterminer les codecs utilisés au cours de ladite session,
- transmettre la demande interceptée au terminal B (respectivement A)
- bloquer la transmission entre le terminal A et le terminal B ; et
- calculer les valeurs des ressources résiduelles en bande passante en fonction des ressources libérées sur la liaison entre le terminal A et le terminal B par l'arrêt de la session, et
- mettre à jour la base de données d'utilisation des ressources d'accès au réseau, avec les valeurs résiduelles de capacité de transport calculée à l'étape précédente.

4. Procédé selon la revendication 2, dans lequel la transmission d'information consécutive à l'établissement de la session entre le terminal A et le terminal B est effectuée selon des débits prescrits acceptés à la fois par le terminal A et le terminal B et compatibles avec la capacité courante de transmission de la liaison entre le terminal A et le terminal B.

5. Procédé selon l'une des revendications 1 à 4, **caractérisé en ce que** le réseau de télécommunication est à transfert de données par paquets et **en ce que** le message contenant la liste de codecs échangée entre le terminal A et le terminal B est transmis via l'un des protocoles de signalisation SIP ou H323.

6. Dispositif de contrôle d'admission de session multimédia entre un terminal A (2) et un terminal B (6) connectés à un réseau de télécommunication dans lequel, préalablement à l'établissement de la session, le terminal A (respectivement B) transmet au terminal B (respectivement A) un message contenant une liste de codecs à utiliser pour coder les informations à échanger au cours de la session à établir, et à la fin d'une session, le terminal A (2) (respectivement B) transmet au terminal B (6) une demande de fin de session, dispositif **caractérisé en ce qu'**il comporte des moyens pour intercepter le message contenant la liste de codecs et des moyens pour modifier la liste de codecs proposée dans le message intercepté pour tenir compte des ressources courantes en bande passante disponibles pour la liaison (4) entre le terminal A et le terminal B.

7. Dispositif selon la revendication 6, **caractérisé en ce qu'**il comporte :

- un module de filtrage de flux média MF (8) apte à filtrer sur commande de filtrage, reçue d'un module d'appel MA (10), les flux média relatifs à une session identifiée sur la liaison entre le terminal A et l'entité B, selon des prescriptions de débit indiquées dans la commande de filtrage, et apte à bloquer sur commande de blocage, reçue du module MA (10), les flux média relatifs à une session identifiée sur cette liaison ; le module MF (8) étant apte à intercepter et à router vers le module MA (10) les flux de signalisation en provenance du terminal A ainsi que les flux de signalisation en provenance de l'entité B,
- un module d'appel MA (10) destiné à extraire les codecs proposés dans les messages de signalisation,
- un module d'admission de session MAS (12) destiné à générer une nouvelle demande d'établissement de session avec une liste de codecs dont les capacités de transport sont compatibles avec les ressources en bande passante disponibles pour la liaison entre le terminal A (2) et le terminal B (6), et
- une base de donnée BD (14) contenant la valeur des ressources en bande passante disponibles pour la liaison (4) entre le terminal A (2) et le terminal B (6),
- un module de routage de flux de signalisation MRFS apte à router les flux de signalisation transmis entre l'entité A et l'entité B vers le module d'appel MA.

**Claims**

1. Method of access control of a multimedia session between a terminal A and a terminal B connected to a telecommunications network in which, prior to the session set-up, terminal A (respectively B) transmits to terminal B (respectively A) a message containing a list of codecs to be used for encoding the information to be exchanged during the session to be set up, and at the end of a session, terminal A (respectively B) transmits to terminal B (respectively A) an end of session request, the method being **characterized in that** it comprises the following steps:

- intercepting the message containing the list of codecs,
- modifying the list of codecs proposed in the intercepted message to take into account the actual bandwidth resources available for the link between terminal A and terminal B, and
- transmitting, to terminal B (respectively A) the message containing the modified list of codecs,
- reserving the resources and updating a database for using access resources.

2. Method according to Claim 1, comprising the following steps in the event that terminal B (respectively A) accepts the request to set up a session:

- setting up the session between terminal A and terminal B using the modified codecs,
- calculating the residual bandwidth resources according to the bandwidth resources corresponding to the accepted codecs,
- storing the value of the residual resources calculated in the previous step in a database for using access resources,

   - filtering the media flows according to a data rate command,
   - authorizing the flow transmission between terminal A and terminal B according to the bandwidth resources corresponding to the accepted codecs,

and in the event of session refusal,
- transmitting to terminal A (respectively terminal B) a message indicating the failure of session set-up,
- updating the said database according to the bandwidth resources released on the link.

3. Method according to Claim 1, comprising the following steps at the end of a multimedia session:

- intercepting the end of session request sent by terminal A (respectively B),
- identifying the current session whose end is requested,
- determining the codecs used during the said session,
- transmitting the intercepted request to terminal B (respectively A)
- blocking the transmission between terminal A and terminal B; and
- calculating the values of the residual bandwidth resources according to the resources released on the link between terminal A and terminal B by stopping the session, and

- updating the database for using network access resources, with the residual values of the carrying capacity calculated in the previous step.

4. Method according to Claim 2, in which the transmission of information following the set-up of the session between terminal A and terminal B is carried out according to recommended data rates accepted by both terminal A and terminal B and compatible with the actual transmission capacity of the link between terminal A and terminal B.

5. Method according to one of Claims 1 to 4, **characterized in that** the telecommunications network is a packet data transfer network and **in that** the message containing the list of codecs exchanged between terminal A and terminal B is transmitted via one of the signalling protocols SIP or H323.

6. Access control device for a multimedia session between a terminal A (2) and a terminal B (6) connected to a telecommunications network in which, prior to the session set-up, terminal A (respectively B) transmits to terminal B (respectively A) a message containing a list of codecs to be used for encoding the information to be exchanged during the session to be set up, and at the end of a session, terminal A (2) (respectively B) transmits to terminal B (respectively A) (6) an end of session request, a device **characterized in that** it includes means for intercepting the message containing the list of codecs and means for modifying the list of codecs proposed in the intercepted message to take into account the actual bandwidth resources available for the link (4) between terminal A and terminal B.

7. Device according to Claim 6, **characterized in that** it includes:

- a media flow filtering module MF (8) capable of filtering on a filtering command, received from a call module MA (10), the media flows relative to a session identified on the link between terminal A and the entity B, according to data rate recommendations indicated in the filtering command, and capable of blocking, on a blocking command, received from the module MA (10), the media flows relative to a session identified on this link; the module MF (8) being capable of intercepting and routing to the module MA (10) the signalling flows originating from terminal A and the signalling flows originating from the entity B,
- a call module MA (10) intended for extracting the codecs proposed in the signalling messages,
- a session access module MAS (12) intended for generating a new request to set up a session with a list of codecs whose carrying capacities are compatible with the bandwidth resources available for the link between terminal A (2) and terminal B (6), and
- a database BD (14) containing the value of the bandwidth resources available for the link (4) between terminal A (2) and terminal B (6),
- a signalling flow routing module MRFS capable of routing the signalling flows transmitted between the entity A and the entity B to the call module MA.

**Patentansprüche**

1. Verfahren zur Zulassungskontrolle einer Multimediasitzung zwischen einem Terminal A und einem Terminal B, die an ein Telekommunikationsnetz angeschlossen sind, in dem vor der Einrichtung der Sitzung das Terminal A (bzw. B) an das Terminal B (bzw. A) eine Meldung übermittelt, die eine Liste von Kodizes enthält, die zu verwenden sind, um die während der einzurichtenden Sitzung auszutauschenden Informationen zu codieren, und am Ende einer Sitzung das Terminal A (bzw. B) an das Terminal B (bzw. A) einen Antrag auf Beendigung der Sitzung übermittelt, wobei das Verfahren **dadurch gekennzeichnet ist, dass** es die folgenden Schritte umfasst:

- Abfangen der die Liste der Kodizes enthaltenen Meldung,
- Ändern der Liste von Kodizes, die in der abgefangenen Meldung vorgeschlagen wird, um die laufenden Ressourcen im Durchgangsband, die für die Verbindung zwischen dem Terminal A und dem Terminal B verfügbar sind, zu berücksichtigen,
- Übertragen der Meldung, die die geänderte Liste der Kodizes enthält, an das Terminal B (bzw. A),
- Reservieren der Ressourcen und Aktualisieren einer Datenbasis zur Verwendung der Zugriffsressourcen.

2. Verfahren nach Anspruch 1, umfassend die folgenden Schritte im Falle der Annahme des Antrags auf Einrichten einer Sitzung durch das Terminal B (bzw. A) :

- Einrichten der Sitzung zwischen dem Terminal A und dem Terminal B unter Verwendung der geänderten Kodizes,
- Berechnen der Restressourcen im Durchgangsband in Abhängigkeit von den Ressourcen im Durchgangsband entsprechend den angenommenen Kodizes,
- Speichern des Werts der Restressourcen, der im vorherigen Schritt berechnet wurde, in einer Datenbasis zur Verwendung der Zugriffsressourcen,

- Filtern der Medienströme in Abhängigkeit von einer Mengensteuerung,
- Genehmigung der Übertragung von Strömen zwischen dem Terminal A und dem Terminal B nach den Durchlassbandressourcen entsprechend den angenommenen Kodizes,

und im Falle der Ablehnung der Sitzung
- Übertragung einer Meldung an das Terminal A (bzw. B), die das Nichtzustandekommen der Einrichtung der Sitzung anzeigt,
- Aktualisieren der Datenbasis in Abhängigkeit von den auf der Verbindung freigesetzten Durchlassbandressourcen.

3. Verfahren nach Anspruch 1, umfassend die folgenden Schritte am Ende einer Multimediasitzung:

- Abfangen des Antrags auf Beendigung der Sitzung, der vom Terminal A (bzw. B) entsandt wurde,
- Identifikation der laufenden Sitzung, deren Beendigung gefordert wird,
- Bestimmen der Kodizes, die während der Sitzung verwendet werden,
- Übertragen des abgefangenen Antrags an das Terminal B (bzw. A),
- Blockieren der Übertragung zwischen dem Terminal A und dem Terminal B; und
- Berechnen der Werte der Restressourcen im Durchlassband in Abhängigkeit von den auf der Verbindung zwischen dem Terminal A und dem Terminal B durch das Einstellen der Sitzung freigesetzten Ressourcen, und
- Aktualisieren der Datenbasis zur Verwendung der Zugriffsressourcen auf das Netz mit den Restwerten der Beförderungskapazität, die im vorherigen Schritt berechnet wurde.

4. Verfahren nach Anspruch 2, bei dem die Informationsübertragung nach der Einrichtung der Sitzung zwischen dem Terminal A und dem Terminal B je nach den vorgeschriebenen Mengen erfolgt, die sowohl vom Terminal A als auch vom Terminal B angenommen werden und mit der laufenden Übertragungskapazität der Verbindung zwischen dem Terminal A und dem Terminal B vereinbar sind.

5. Verfahren nach einem der Ansprüche 1 bis 4, **dadurch gekennzeichnet, dass** das Telekommunikationsnetz mit Datenübertragung im Paket funktioniert, und dass die Meldung, die die Liste der Kodizes enthält, die zwischen dem Terminal A und dem Terminal B ausgetauscht wird, über eines der Anzeigeprotokolle SIP oder H323 übertragen wird.

6. Vorrichtung zur Zulassungskontrolle einer Multimediasitzung zwischen einem Terminal A (2) und einem Terminal B (6), die an ein Telekommunikationsnetz angeschlossen sind, in dem vor der Einrichtung der Sitzung das Terminal A (bzw. B) an das Terminal B (bzw. A) eine Meldung übermittelt, die eine Liste von Kodizes enthält, die zu verwenden sind, um die während der einzurichtenden Sitzung auszutauschenden Informationen zu codieren, und am Ende einer Sitzung das Terminal A (2) (bzw. B) an das Terminal B (6) (bzw. A) einen Antrag auf Beendigung der Sitzung übermittelt, wobei die Vorrichtung **dadurch gekennzeichnet ist, dass** sie Mittel umfasst, um die Meldung, die die Liste der Kodizes enthält, abzufangen, und Mittel, um die Liste der Kodizes, die in der abgefangenen Meldung vorgeschlagen wird, zu ändern, um die laufenden Ressourcen im Durchlassband zu berücksichtigen, die für die Verbindung (4) zwischen dem Terminal A und dem Terminal B verfügbar sind.

7. Vorrichtung nach Anspruch 6, **dadurch gekennzeichnet, dass** sie umfasst:

- ein Filtermodul für den Medienstrom MF (8), das bei einem Filterbefehl, der von einem Abrufmodul MA (10) empfangen wird, die Medienströme, die sich auf eine auf der Verbindung zwischen dem Terminal A und der Einheit B identifizierte Sitzung beziehen, nach Mengenvorschriften filtern kann, die in dem Filterbefehl angegeben sind, und auf Blockierbefehl, der von dem Modul MA (10) empfangen wird, die Medienströme, die sich auf eine auf dieser Verbindung identifizierte Sitzung beziehen, blockieren kann; wobei das Modul MF (8) die Anzeigeströme, die von dem Terminal A kommen, sowie die Anzeigeströme, die von der Einheit B kommen, abfangen und zum Modul MA (10) routen kann,
- ein Abrufmodul MA (10), das dazu bestimmt ist, die in den Anzeigemeldungen vorgeschlagenen Kodizes zu entnehmen,

- ein Sitzungszulassungsmodul MAS (12), das dazu bestimmt ist, einen neuen Antrag auf Einrichtung einer Sitzung mit einer Liste von Kodizes zu erstellen, deren Beförderungskapazitäten mit den für die Verbindung zwischen dem Terminal A (2) und dem Terminal B (6) verfügbaren Ressourcen im Durchlassband vereinbar sind, und

- eine Datenbasis BD (14), die den Wert der Ressourcen im Durchlassband enthält, die für die Verbindung (4) zwischen dem Terminal A (2) und dem Terminal B (6) verfügbar sind,

- ein Routingmodul für den Anzeigestrom MRFS, das die zwischen der Einheit A und der Einheit B übertragenen Anzeigeströme zum Abrufmodul MA routen kann.

A — 2

4

MF — 8    MA — 10    MAS — 12    BD — 14

B — 6

# FIG. 1

FIG. 2

FIG. 3

EP 1 647 133 B1